# EUROPÄISCHE PATENTSCHRIFT

(11) **EP 0 386 330 B1**
(45) Veröffentlichungstag und Bekanntmachung des Hinweises auf die Patenterteilung: **09.06.1993**
(21) Anmeldenummer: 89122292.9
(22) Anmeldetag: 02.12.1989
(51) Int. Cl.: F16D 25/12

(54) **Kupplungsbetätigungsvorrichtung**
Clutch actuating device
Dispositif d'actionnement d'embrayage

(30) Priorität: 08.03.1989 DE 3907341
(43) Veröffentlichungstag der Anmeldung: 12.09.1990
(73) Patentinhaber: INA Wälzlager Schaeffler KG, 91063 Herzogenaurach (DE)
(72) Erfinder: Seegers, Hanns, Dipl.-Ing., D-8522 Herzogenaurach (DE)

(56) Entgegenhaltungen:
- DE-A- 3 247 702
- FR-A- 2 612 464
- US-A- 3 431 730
- US-A- 4 286 504
- US-A- 4 303 146

## Beschreibung

Die Erfindung betrifft eine Kupplungsbetätigungsvorrichtung, bei der in einem hohlzylindrischen Gehäuse ein über Betätigungsorgane mit einem Kupplungsausrücklager gekoppelter Betätigungskolben und im axialen Abstand dazu ein Ausgleichskolben längsverschieblich geführt sind, welche Kolben durch eine Druckfeder auf Abstand gehalten sind und zusammen mit einem Abschnitt der Zylinderwandung einen mit einer externen Ölversorgung verbundenen Betätigungsölraum begrenzen.

Aus der WO-A-8 603 811 ist eine derartige auch als Kupplungsnehmerzylinder bezeichnete Kupplungsbetätigungsvorrichtung bekannt, bei der der Ausgleichskolben mit einer auf Fluiddruck ansprechenden Kupplungssteuerungseinrichtung gekoppelt ist, während ein in Abhängigkeit vom Verschiebeweg des Ausgleichskolbens geregelter Öldurchlaß den Betätigungsölraum mit einem Ölreservoir verbindet. Bei Betätigung der Kupplung verschiebt sich der Ausgleichskolben in Richtung des Betätigungskolbens und schließt dabei den Öldurchlaß, so daß die Betätigungskraft über das Ölpolster und zum Teil über die Druckfeder auf den Betätigungskolben übertragen wird, der seinerseits über die Betätigungsorgane und das Kupplungsausrücklager die Kupplung trennt. Bei zunehmendem Verschleiß der Kupplungsbeläge verlagert sich die Ausgangsstellung des Betätigungskolbens in Richtung des Ausgleichskolbens, wodurch sich der Abstand zwischen Ausgleichs- und Betätigungskolben verkürzt. Das in dem solchermaßen verkleinerten Betätigungsölraum überflüssige Öl entweicht über den bei unbetätigter Kupplung offenen Öldurchlaß in das Ölreservoir.

Vorteilhaft an dieser Erfindung ist die Tatsache, daß sowohl der Kolbenhub beider Kolben, als auch die Anfangs- und Endstellung des Ausgleichskolbens über die gesamte Lebensdauer der Kupplung konstant bleiben, und zwar unabhängig vom Belagverschleiß. Es wirkt sich allerdings nachteilig aus, daß mit einer zunehmenden Verkürzung des Abstandes von Ausgleichs-und Betätigungskolben die Druckfeder komprimiert wird. Die damit vergrößerte Federkraft wirkt auf den Betätigungskolben im gleichen Sinne wie eine Kupplungsbetätigung, so daß im Extremfall auch bei nicht betätigtem Kupplungspedal und stark komprimierter Druckfeder die Kupplung nicht mehr schließt. In der Praxis ist es nicht möglich, eine Druckfeder kostengünstig so herzustellen, daß sie bei einerseits neuen Reibbelägen eine ausreichende Vorspannkraft auf den Betätigungskolben ausübt und andererseits ihre Federkraft auch bei verkürzter Federlänge nicht oder nur unwesentlich steigert.

Als weiterer Stand der Technik offenbart die DE-A-32 47 702 einen Geberzylinder für eine hydraulisch arbeitende Kupplungsbetätigung. In einem durch einen Boden verschlossenen hohlzylindrischen Gehäuse sind in axialem Abstand ein Kolben und eine Anschlaghülse längsverschieblich geführt. Beide Bauteile sind durch eine Druckfeder auf Abstand gehalten und durch Verbindungsmittel miteinander gekoppelt. Eine Austrittsöffnung eines Nachlaufkanals und eine Zuführöffnung zum Nehmerzylinder sind in der Gehäusewand zwischen der Anschlaghülse und dem Gehäuseboden angeordnet. Darüber hinaus ist zwischen der Anschlaghülse und dem Gehäuseboden ein Dichtring derart angeordnet, daß bei einer Betätigung des Kolbens die Austrittsöffnung des Nachlaufkanals verschlossen wird. Anschlaghülse und Dichtring weisen in jedem Betriebszustand Durchlässe auf, wodurch das vom Kolben verdrängte Öl in die Auslaßöffnung zum Nehmerzylinder gelangen kann. Eine den Kolben in seine Ausgangslage zurückdrückende Feder ist zwischen dem Boden des Gehäuses und der Anschlaghülse vorgesehen. Bei diesem Aufbau ist von Nachteil, daß er nicht geeignet ist für eine Betätigung des Geberzylinders mittels einer externen Druckquelle.

Aus der US-A-4 303 146 geht ein Betätigungszylinder für eine Scheibenbremse hervor, der bei nicht betätigter Bremse einen größeren Abstand zwischen Bremsbelägen und der Bremsscheibe sicherstellt. Der Aufbau sieht ein hohlzylindrisches, durch einen Boden verschlossenes Gehäuse vor, in dem ein Betätigungskolben längsverschieblich geführt ist. Zwischen Betätigungskolben und dem Boden des Gehäuses ist eine stufenförmige Durchmesserreduzierung des Gehäuses vorgesehen, in der eine unmittelbar mit dem Betätigungskolben zusammenwirkende Zwischenplatte ebenfalls verschieblich geführt ist. An der Zwischenplatte ist ein durch ein Ventil verschließbarer Durchlaß vorgesehen. Bei Betätigung der Bremse wird zunächst die Zwischenplatte mit höherer Geschwindigkeit bewegt, wobei diese sich an den Betätigungskolben anlegt und diesen verschiebt. Nach Anlage der Bremsbeläge an die Bremsscheibe wird zur Betätigung der Bremse ein höherer Hydraulikdruck notwendig, der bewirkt, daß das Ventil in der Drucklatte öffnet und der Betätigungskolben unmittelbar mit Öldruck beaufschlagt wird. Das Dokument beschreibt einen speziellen Betätigungszylinder für Scheibenbremsen, der für eine Kupplungsbetätigung ungeeignet ist.

Die Aufgabe der Erfindung ist es, die Kupplungsbetätigungsvorrichtung so zu gestalten, daß die auf den Betätigungskolben wirkende Vorspannkraft der Druckfeder über die gesamte Lebensdauer der Kupplung nahezu konstant bleibt.

Erfindungsgemäß wird diese Aufgabe dadurch gelöst, daß bei einer Kupplungsbetätigungsvorrichtung der genannten Bauart der Betätigungsölraum mit einer durch das Kupplungspedal betätigten Druckfluidquelle verbunden ist und der Ausgleichskolben einen von einem Teil der Zylinderwandung und einem Gehäuseboden gebildeten Ausgleichsölraum abschließt, wobei der Ausgleichs- und der Betätigungsölraum durch einen in Abhängigkeit sowohl vom Kolbenabstand als auch vom Betätigungszustand geregelten Öldurchlaß verbunden sind und der Betätigungskolben und der Ausgleichskolben zusätzlich durch nur Zugkräfte übertragende Verbindungsmittel in axialer Richtung miteinander gekoppelt sind.

Die Regelung des Öldurchlasses erfolgt zweckmäßigerweise so, daß der Öldurchlaß sowohl bei betätigter Kupplung, als auch bei Unterschreiten eines bestimmten Kolbenabstandes geöffnet ist, während in allen anderen Betriebszuständen der Öldurchlaß schließt. Damit wird erreicht, daß die Druckfeder auf einem in konstantem Abstand zum Betätigungskolben mitbewegten Ausgleichskolben abgestützt ist und daher ihre Länge während der Betriebsdauer nicht wesentlich ändert.

Eine vorteilhafte Ausgestaltung der Erfindung sieht vor, den Öldurchlaß als Einwegventil mit axialen Kanälen im Ausgleichskolben selbst anzuordnen, wobei dieses den Durchfluß vom Ausgleichs- zum Betätigungsölraum selbsttätig sperrt, während bei einer Unterschreitung des Sollabstandes der Kolben ein mit dem Betätigungskolben zusammenwirkender Taster dieses Einwegventil entgegen seiner Schließrichtung öffnet. Dieser Taster kann in Form eines Stiftes am Betätigungskolben angebracht sein, welcher Stift in den saugseitigen Ventilkanal hineinragt und direkt auf den Ventilkörper wirkt.

Eine Ausführungsvariante der mechanischen Verbindungsmittel zwischen Betätigungs- und Ausgleichskolbens besteht aus einer auf der dem Ausgleichskolben zugewandten Seite des Betätigungskolben befestigten koaxialen Hülse, welche an ihrem dem Ausgleichskolben zugewandten Ende einen radial einwärts gerichteten Flansch aufweist und eine am Ausgleichskolben angebrachte im Durchmesser geringere Hülse umgreift, die ihrerseits an ihrem dem Betätigungskolben zugewandten Ende einen radial auswärts gerichteten Flansch aufweist, welcher sich in axialer Richtung mit dem radial einwärts gerichteten Flansch der ersten Hülse überdeckt.

Die Erfindung wird anhand des nachfolgenden Ausführungsbeispieles näher erläutert.

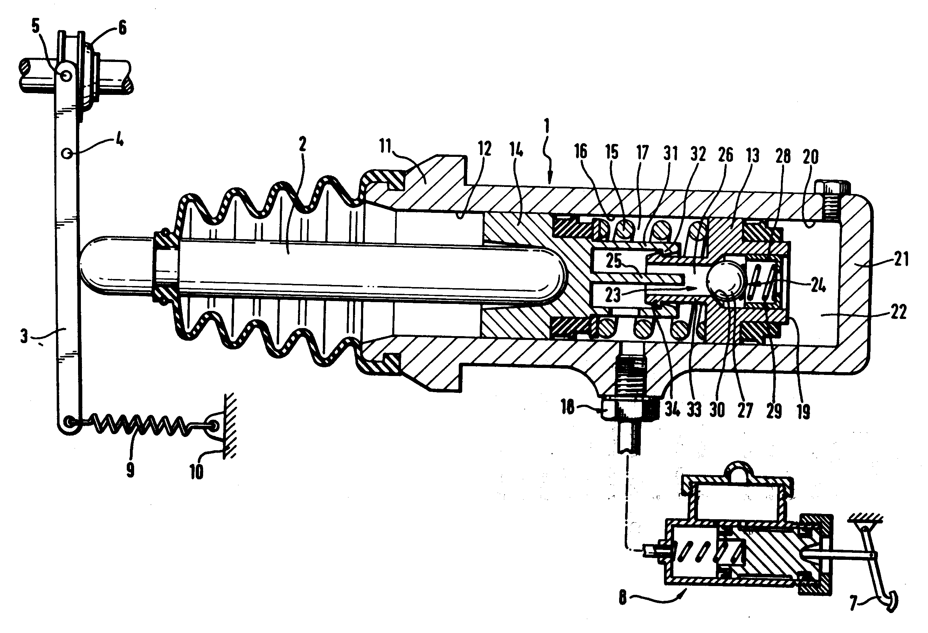

In der Figur ist der Längsschnitt einer erfindungsgemäßen Kupplungsbetätigungsvorrichtung 1 mit der schematisierten, nicht maßstäblichen Anschlußkonstruktion dargestellt. Über die Kolbenstange 2 wirkt die Kupplungsbetätigungsvorrichtung 1 auf den Ausrückhebel 3, der im Lager 4 schwenkbar befestigt ist und über eine Gleitmuffe 5 das Kupplungsausrücklager 6 betätigt. Bei nicht betätigten Kupplungspedal 7 wird die Druckfluidquelle 8, in die ein Ausgleichsbehälter integriert ist, drucklos und die Rückholfeder 9, die zwischen dem Ausrückhebel 3 und der nicht näher dargestellten Tragkonstruktion 10 angebracht ist, zieht das Kupplungsausrücklager 6 in seine Ausgangsstellung zurück. Die Kupplungsbetätigungsvorrichtung 1 besteht aus einem hohlzylindrischen Gehäuse 11 in dessen Bohrung 12 der Ausgleichskolben 13 und der Betätigungskolben 14, an dem sich die Kolbenstange 2 abstützt, längsverschieblich geführt sind, wobei die Kolben 13, 14 durch eine Druckfeder 15 im Abstand zueinander gehalten sind und zusammen mit dem Bohrungswandungsabschnitt 16 den Betätigungsölraum 17 begrenzen, welcher über das Anschlußstück 18 mit der Druckfluidquelle 8 verbunden ist. Der Ausgleichskolben 13 begrenzt mit seiner vom Betätigungskolben 14 abgewandten Seite 19 den durch den Bohrungswandungsabschnitt 20 und den Gehäuseboden 21 gebildeten Ausgleichsölraum 22. Der Betätigungsölraum 17 und der Ausgleichsölraum 22 sind durch einen in Abhängigkeit vom Betriebszustand der Kupplungsbetätigungsvorrichtung 1 und vom Abstand der Kolben 13, 14 geregelten Öldurchlaß 23 verbunden. Dieser Öldurchlaß 23 wird durch das Einwegventil 24 gebildet. Das Einwegventil 24 sperrt selbsttätig den Öldurchfluß vom Ausgleichsölraum 22 zum Betätigungsölraum 17, während es bei umgekehrter Durchflußrichtung öffnet. Unterschreitet der Abstand zwischen Betätigungskolben 14 und Ausgleichskolben 13 einen Sollabstand, wird das Einwegventil 24 durch den am Betätigungskolben 14 angebrachten Taster 25 entgegen seiner Schließrichtung geöffnet, indem der Taster 25 durch den Saugkanal 26 auf den Ventilkörper 27 einwirkt und diesen entgegen der Wirkung der in der Büchse 28 gehaltenen Schließfeder 29 aus dem Ventilsitz 30 herausdrückt. Die Kopplung von Betätigungskolben 14 und Ausgleichskolben 13 erfolgt in diesem Ausführungsbeispiel durch die am Betätigungskolben 14 angebrachte, in Richtung des Ausgleichskolbens 13 weisende Hülse 31, welche an ihrem dem Ausgleichskolben 13 zugewandten Ende einen radial einwärts gerichteten Flansch 32 aufweist und eine im Durchmesser geringere, mit dem Ausgleichskolben 13 verbundene zweite Hülse 33 übergreift, welche ihrerseits an ihrem dem Betätigungskolben 14 zugewandten Ende einen radial auswärts gerichteten Flansch 34 aufweist, der den radial einwärts gerichteten Flansch 32 der ersten Hülse 31 in axialer Richtung überdeckt. Zur Montage dieser Verbindung wird die am Ausgleichskolben 13 befestigte Hülse 33 unter elastischer Verformung des Flansches 34 in die gegebenenfalls geschlitzte Hülse 31 am Betätigungskolben 14 eingesetzt. Diese Verbindung überträgt ausschließlich Zugkräfte, während sich bei auftretenden axialen Druckkräften die Hülsen 31, 33 gleitend ineinander verschieben.

Bei Betätigung des Kupplungspedals 7 beaufschlagt die Druckfluidquelle 8 den Ausgleichsölraum 22 und den Betätigungsölraum 17 gleichermaßen mit Drucköl. Unter der Wirkung des Öldrucks wird der Betätigungskolben 14 in Betätigungsrichtung der Kupplung bewegt und nimmt über die Verbindungsmittel 31, 32, 33, 34 den Ausgleichskolben 13 mit. Das Einwegventil 24 ist dabei geöffnet. Der Abstand der Kolben 13, 14 bleibt bei Betätigung der Kupplung also erhalten. Bei nicht betätigtem Kupplungspedal 7 ist die Druckfluidquelle 8 drucklos, folglich wird der Betätigungskolben 13 aufgrund der Wirkung der Rückholfeder 9 in Richtung des Ausgleichkolbens 14 zurückgeschoben, wobei durch das Anschlußstück 18 Öl aus dem Betätigungsölraum 17 entweicht. In diesem Zustand ist der Öldruck im Betätigungsölraum 17 kleiner als im Ausgleichsölraum 22, das Einwegventil 23 ist also geschlossen, so daß der Ausgleichskolben 13 durch das im Ausgleichsölraum 22 vorhandene Öl in seiner Position gehalten wird. Unterschreitet bei weiterem Absinken des Betätigungskolbens 14 der Abstand der Kolben 13 und 14 das vorgegebene Maß, öffnet der Taster 25 das Einwegventil 24, womit Öl aus dem Ausgleichsölraum 22 entweicht und der Ausgleichskolben 13 unter der Wirkung der Druckfeder 15 in Richtung des Gehäusebodens 21 absinkt, und zwar so lange, bis der Sollabstand wieder erreicht ist und das Einwegventil 24 schließt. Dieser Vorgang wiederholt sich so lange, bis der Betätigungskolben 14 in die Ausgangsstellung zurückgekehrt ist.

Mit dieser Anordnung wird also erreicht, daß der Kolbenabstand zwischen dem Kolben 13 und 14 über die gesamte Lebensdauer der Kupplungsbetätigungsvorrichtung 1 nahezu konstant bleibt und sich folglich die Federkraft auf den Betätigungskolben 14 und damit auf das Kupplungsausrücklager 6 nicht erhöht.

Das gezeigte Ausführungsbeispiel stellt lediglich eine derzeit günstig erscheinende Gestaltung der Erfindung dar. Es sind durchaus Ausführungsformen denkbar, bei denen der Öldurchlaß als ein im Gehäuse angebrachter geregelter Bypaß ausgeführt ist, der z. B. über an den Kolben angebrachte Meßwertgeber elektrisch oder elektronisch gesteuert wird. Darüberhinaus können verschiedene gleichwirkende Ventilformen und Verbindungsmittel eingesetzt werden.

## Patentansprüche

1. Kupplungsbetätigungsvorrichtung, bei der in einem hohlzylindrischen Gehäuse (11) ein über Betätigungsorgane (2, 3, 5) mit einem Kupplungsausrücklager (6) gekoppelter Betätigungskolben (14) und ein Ausgleichskolben (13) längsverschieblich geführt sind, welche Kolben (13, 14) durch eine Druckfeder (15) auf Abstand zueinander gehalten sind und zusammen mit einem Abschnitt der Zylinderwandung (16) des Gehäuses (11) einen mit einem externen Ölreservoir (8) verbundenen Betätigungsölraum (17) einschließen, **dadurch gekennzeichnet,** daß der Ausgleichskolben (13) mit seiner vom Betätigungskolben (14) abgewandten Seite (19) einen durch die Zylinderwandung (20) und den Gehäuseboden (21) gebildeten Ausgleichsölraum (22) begrenzt, wobei der Betätigungsölraum und der Ausgleichsölraum durch einen in Abhängigkeit sowohl vom Kolbenabstand als auch vom Betätigungszustand geregelten Öldurchlaß (23) verbunden sind, daß der Betätigungsölraum (17) mit einer Druckölquelle (8) verbunden ist, und daß der Betätigungskolben (14) und der Ausgleichskolben (13) zusätzlich durch nur Zugkräfte übertragende Verbindungsmittel (31, 32, 33, 34) in axialer Richtung miteinander gekoppelt sind.

2. Kupplungsbetätigungsvorrichtung nach Anspruch 1, **dadurch gekennzeichnet,** daß der Öldurchlaß (23) öffnet, wenn entweder die Kupplung betätigt ist oder wenn bei nicht betätigter Kupplung der Abstand zwischen Betätigungs- (14) und Ausgleichskolben (13) einen Sollwert unterschreitet.

3. Kupplungsbetätigungsvorrichtung nach Anspruch 2, **dadurch gekennzeichnet,** daß ein im Ausgleichskolben (13) angeordnetes mit axial verlaufenden Kanälen (26) versehenes Einwegventil (24) mit Schließrichtung bei Durchströmung vom Ausgleichs- (22) zum Betätigungsölraum (17) den Öldurchlaß (23) bildet.

4. Kupplungsbetätigungsvorrichtung nach Anspruch 3, **dadurch gekennzeichnet,** daß ein am Betätigungskolben (14) angebrachter in Richtung des Ausgleichskolbens (13) weisender Taster (25) das Einwegventil (24) entgegen seiner Schließrichtung öffnet, wenn der Kolbenabstand einen Sollwert unterschreitet.

5. Kupplungsbetätigungsvorrichtung nach einem oder mehreren der Ansprüche 1 bis 4, **dadurch gekennzeichnet,** daß am Betätigungskolben (14) eine in Richtung des Ausgleichskolbens (13) weisende erste koaxiale Hülse (31) vorgesehen ist, welche an ihrem dem Ausgleichskolben (13) zugewandten Ende einen radial einwärts gerichteten Flansch (32) aufweist und eine am Ausgleichskolben (13) befestigte im Durchmesser kleinere zweite Hülse (33) umgreift, welche ihrerseits an ihrem dem Betätigungskolben (14) zugewandten Ende einen radial auswärts gerichteten Flansch (34) aufweist, der den Flansch (32) der ersten Hülse (31) in axialer Richtung überdeckt.

## Claims

1. Clutch actuating device in which an actuating piston (14) coupled via actuating members (2, 3, 5) with a clutch release bearing (6), and a compensating piston (13) are longitudinally displaceably guided in a hollow cylindrical housing (11), which pistons (13, 14) are retained spaced apart by a compression spring (15) and together with a portion of the cylinder wall (16) of the housing (11) enclose an actuating oil chamber (17) which is connected to an external oil reservoir (8), characterized in that the end (19) of the compensating piston (13) facing away from the actuating piston (14) delimits a compensating oil chamber (22) formed by the cylinder wall (20) and the housing bottom (21), the actuating oil chamber and the compensating oil chamber being connected to each other by an oil passage (23) which is regulated both as a function of the space between the pistons and the operational state, the actuating oil chamber (17) is connected to a hydraulic oil source (8), and the actuating piston (14) and the compensating piston (13) are additionally coupled with each other in the axial direction by connecting means (31, 32, 33, 34) which transmit only axial forces.

2. Clutch actuating device according to claim 1, characterized in that the oil passage (23) opens either when the clutch is actuated or when, with an unactuated clutch, the distance between the actuating piston (14) and the compensating piston (13) falls below a desired value.

3. Clutch actuating device according to claim 2, characterized in that a one-way valve (24) arranged in the compensating piston (13) and provided with axially extending canals (26) and whose closing direction is such as to prevent flow from the compensating oil chamber (22) to the actuating oil chamber (17) constitutes the oil passage (23).

4. Clutch actuating device according to claim 3, characterized in that a feeler (25) attached to the actuating piston (14) and oriented towards the compensating piston (13) opens the one-way valve (24) against the closing direction thereof when the distance between the pistons falls below a desired value.

5. Clutch actuating device according to one or more of the claims 1 to 4, characterized in that a first co-axial sleeve (31) oriented towards the compensating piston (13) is provided on the actuating piston (14) and comprises, at its end facing the compensating piston (13), a radially inwards directed flange (32), which sleeve (31) engages around a second sleeve (33) of smaller diameter which is fixed to the compensating piston (13) and which, in turn, at its end facing the actuating piston (14), comprises a radially outwards directed flange (34) which overlaps the flange (32) of the first sleeve (31) in the axial direction.

## Revendications

1. Dispositif d'actionnement d'embrayage dans lequel un piston d'actionnement (14) accouplé à une butée de débrayage (6) par des organes d'actionnement (2,3,5) ainsi qu'un piston de compensation (13) sont guidés en déplacement longitudinal dans un boîtier cylindrique creux (11), lesdits pistons (13,14) étant retenus à distance l'un de l'autre par un ressort de pression (15) et entourant conjointement avec une partie (16) de la paroi du cylindre du boîtier (11) une chambre d'actionnement à huile (17) qui est reliée à un réservoir d'huile (8) externe, caractérisé en ce que le piston de compensation (13) délimite, par son extrémité (19) opposée au piston d'actionnement (14), une chambre de compensation d'huile (22) formée par la proi (20) du cylindre et le fond (21) du boîtier, la chambre d'actionnement à huile et la chambre de compensation d'huile étant reliées l'une à l'autre par un passage d'huile (23) qui est réglé tant en fonction de la distance entre les pistons qu'en fonction de l'état d'actionnement, en ce que la chambre d'actionnement à huile (17) est reliée à une source d'huile sous pression (8), et en ce que le piston d'actionnement (14) et le piston de compensation (13) sont en outre accouplés l'un à l'autre par des moyens d'accouplement (31,32,33,34) qui ne transmettent que des forces de traction.

2. Dispositif d'actionnement d'embrayage selon la revendication 1, caractérisé en ce que le passage d'huile (23) s'ouvre quand l'embrayage est actionné ou bien, avec un embrayage non actionné, quand la distance entre le piston d'actionnement (14) et le piston de compensation (13) est en dessous d'une valeur prescrite.

3. Dispositif d'actionnement d'embrayage selon la revendication 2, caractérisé en ce que le passage d'huile (23) est constitué par une soupape unidirectionnelle (24) qui est ménagée dans le piston de compensation (13) et pourvue de canaux (26) qui s'étendent axialement, la direction de fermeture de la soupape étant telle, qu'elle empêche un passage d'huile à partir de la chambre de compensation d'huile (22) dans la chambre d'actionnement à huile (17).

4. Dispositif d'actionnement d'embrayage selon la revendication 3, caractérisé en ce qu'un palpeur (25) raccordé au piston d'actionnement (14) et orienté vers le piston de compensation (13) ouvre la soupape unidirectionnelle (24) à l'encontre de la direction de fermeture de celle-ci quand la distance entre les pistons est en dessous d'une valeur prescrite.

5. Dispositif d'actionnement d'embrayage selon l'une ou plusieurs des revendications 1 à 4, caractérisé en ce que, sur le piston d'actionnement (14), il est prévu une première douille coaxiale (31) qui est orientée vers le piston de compensation (13) et dont l'extrémité qui fait face au piston de compensation (13) comprend une bride (32) orientée radialement vers l'intérieur, laquelle douille (31) s'engageant autour d'une deuxième douille (33) de plus petit diamètre qui est fixée au piston de compensation (13) et qui comprend à son extrémité qui fait face au piston d'actionnement (14), une bride (34) orientée radialement vers l'extérieur qui recouvre la bride (32) de la première douille (31).
